# EUROPEAN PATENT SPECIFICATION

(11) **EP 2 314 772 B1**
(45) Date of publication and mention of the grant of the patent: **01.03.2017**
(21) Application number: 10009477.0
(22) Date of filing: 13.09.2010
(51) Int. Cl.: E01F 15/14

(54) **ENERGY ABSORBING SYSTEM FOR FIXED ROADSIDE HAZARDS**
AUFPRALLENERGIEABSORBTIONSANLAGE FÜR AUFPRALL GEFÄHRDETER OBJEKTE
SYSTEME AMORTISSEUR POUR OBSTACLES ROUTIERS FIXES

(30) Priority: 26.10.2009 ES 200930907
(43) Date of publication of application: 27.04.2011
(73) Proprietor: Hierros y Aplanaciones, S.A. (HIASA), 33470 Corvera, Asturias (ES)
(72) Inventor: Amengual Pericas, Antonio, Corvera 33470 Asturias (ES)
(74) Representative: Capitán García, Maria Nuria

(56) References cited:
- DE-U1-202006 019 546
- US-A- 5 078 366
- US-A1- 2002 158 241
- US-A1- 2003 070 894
- US-A1- 2007 147 957

## Description

### OBJECT OF THE INVENTION.-

The present invention relates to a system for absorbing the kinetic energy of the frontal impact of a vehicle against an impact attenuator or a barrier terminal on which it is meant to be mounted, the impact attenuator or barrier terminal being of the kind for use on the sides and central reservations of roads, and having a structural element, said system comprising an impact element or ram with a forward part that has the form of a wedge, and a deformable longitudinal metallic profile, the ram being, in use, attached directly or indirectly to said structural element, and said deformable metallic profile being, in use, directly or indirectly fixed to the ground and, such that during an impact, the ram moves along the deformable profile which remains substantially static, the wedge-shaped forward part of the ram functioning as an attack surface producing plastic deformations propagating along the deformable profile.

### STATE OF THE ART.-

There exist in practice different types of vehicle containment systems, these being understood as any device installed on the sides or central reservation of a road with the aim of reducing the severity of the impact from a vehicle which erratically abandons the road and collides against an obstacle, runs down a slope or encounters any other element of risk, replacing the potential impact against the element or risk for a more controlled collision with the system itself, in such a way that limits the injuries and lesions both for the occupants of the vehicle and for other road users as well as other persons or objects in the vicinity.

The most widely used type of containment systems are longitudinal safety barriers whose function it is to provide retention and redirecting of a vehicle which goes out of control and erratically leaves the road, thereby reducing the severity of the accidents produced. The safety barriers are conceived and designed for receiving lateral impacts, in other words, for impact trajectories forming a certain angle (< 25°) with the system.

In those locations where vehicles need to be protected from a frontal impact against the obstacle or element of risk on the roadside and such protection cannot be guaranteed with longitudinal barriers, another kind of device is installed known as "impact attenuators" or sometimes also "impact dampers". These devices are positioned between the obstacle and the road with the aim of reducing the severity of the frontal impact of the vehicle against the obstacle and, to do this, they function by absorbing part or all of the energy of the impact by means of a suitable mechanism which acts to the degree that it is longitudinally deformed, in the manner of an "accordion". As all impact attenuators usually have a certain initial length, frequently exposed to the traffic, so they need to behave like safety barriers in the event of a possible lateral impact. For that reason, impact attenuators displaying the capacity to laterally contain impacts are known as "redirecting". Most of the applications of this type of systems requires "redirecting" attenuators.

There exist mobile impact attenuators which are mounted on a heavy vehicle or similar moving truck and which, once the vehicle halts and protects an area in the front, the mobile attenuator is placed in position behind the heavy vehicle in order to reduce the severity of the frontal impact of other vehicles which might collide against the stationary heavy vehicle. This type of mobile impact attenuators, known as Truck Mounted Attenuators (TMA), are usually used for protecting areas of works on a road.

Another kind of containment system that has to protect vehicles against frontal impacts by them are barrier terminals with energy absorption ("TAE"). These devices are specific terminations for longitudinal sections of safety barriers at their ends, which protect the vehicle from frontal impact against the termination of the actual barrier (which is designed for lateral impacts only) thereby reducing the severity of the impact. As with impact attenuators, "TAE" function by means of a mechanism for absorbing kinetic energy which acts to the degree that the vehicle longitudinally deforms the "TAE" until it comes to a complete halt.

There currently exist various models of impact attenuator depending on the mechanism for absorbing kinetic energy used in each case: blocks or boxes of plastic materials, foam, airbags, sets of aluminium tubes, and so on, arranged between metallic frames which, in the event of a frontal impact from the vehicle, are displaced longitudinally along the attenuator "compressing" those boxes, filled drums, vertical axis cylinders manufactured in steel or using elastomeric plastic materials, grooved steel hoops longitudinally arranged between profiles which are "cut" by knives that are displaced as a consequence of the impact from the vehicle, etc.

The use of one or another mechanism for absorbing kinetic energy in a containment system, according to its material composition, configuration and manner of functioning, determines:
- ***The controlled efficiency of the energy absorption and the minimum length of the system.*** In theory, any mechanism that is capable of absorbing more kinetic energy per unit of length would be regarded as more efficient, since this would allow a system with shorter length, lower cost and better adaptation to the available space for a defined impact kinetic energy. However, deceleration of the vehicle until it comes to a halt has to be achieved within certain maximum limits since there would otherwise exists the risk of injuries being caused to the occupants of the vehicle and, moreover, the resulting degree of deformation of the vehicle must not be such that it affects the passenger compartment. The energy absorption mechanism must, on the one hand, be as efficient as possible and, on the other, it must be sufficiently controlled so that the maximum admissible deceleration values are at no time exceeded nor are any excessive deformations produced in the vehicle.
- ***Durability.*** The mechanism must comprise materials and be designed in such a way that guarantees a reasonable useful life, in other words, a period of time in which it maintains its features in the event of impact from vehicles. Plastics, foams, etc., do not usually guarantee a sufficiently long useful life compared to the durability of the safety barriers that are manufactured in galvanized steel or they do not offer a stable behaviour in time, as in the case of airbags and some plastic or foam materials. Only those systems manufactured entirely from galvanized steel can guarantee durabilities similar to those of metal barrier.
- ***Economic cost.*** The efficiency of the absorption system in this type of containment systems has to be achieved at a reasonable cost. The use of excessively costly materials, such as the "honeycomb panel" made of aluminium or certain foams, leads to very expensive systems, reducing their cost/benefit ratio which is fundamental for their application in road safety. The energy absorption mechanism of such systems has to be manufactured in a material and designed such that its cost is kept within a reasonable range. Galvanized steel is a common and economical material, always provided the design of the system is not complex since the economics of the material would otherwise suffer from high manufacturing costs.
- ***Repair facility.*** Impact attenuators are usually high-cost devices in comparison with other containment systems. They are therefore normally designed so that they can resist more than one vehicle impact without having to replace the entire system. In this regard, the energy absorption mechanism must be easy and economical to repair following an impact so that the attenuator can be reused in the greatest possible proportion. This not only reduces the operating costs of the system, it also contributes to environmental sustainability.

The current state of the art offers different and varied solutions for the absorption of kinetic energy from the frontal impact of a vehicle against a containment system but none of them presents certain optimum features according each of the determining factors stated above.

Document US 2003/070894 (Reid) describes a system for absorbing the kinetic energy of the frontal impact of a vehicle according to the preamble of claim 1. The system provides for the controlled rupturing of tubular member by a mandrel whereby forces of an impacting vehicle are absorbed. The rupturing process leads to a non-repetitive operation at low energy levels, and thus unable to properly restrain a car at full speed.

Document US 6,536,985 (Albritton), cited in USA proceedings, describes a device which is a good example of a vehicle restraining system. These kind of devices are comprised by a known sled assembly (40), which function is receiving the vehicle and preventing that it spins upon itself, or being rejected, and a kinetic energy absorbing assembly (186), that is what makes the vehicle coming to a halt, and which is arranged in the lower part, secured to the ground. The different performances of these kinds of devices differ in the physics principle used in the kinetic energy absorbing system that, in this specific case, consists of the cutting of a number of metal plates set out vertically. This device has an important variability in the absorption of energy, because it is very sensitive to the manufacturing tolerances of the cutter blade. It must be taken into account that a kinetic energy absorbing device must have repetitive values, because if not it may occur that in some cases the deceleration might be excessive and in other cases insufficient.

Document US 2007/0147957 A1 (Buth) describes a guardrail box beam terminal that uses the crushing collapse, from the outer, of a hollow profile for absorbing the kinetic energy. This type of device could be used to replace the absorption of kinetic energy system by plate cutting used by Albritton. The problem that this solution raises is the variability of the box beam collapse energy, aggravated by the high friction produced by the chute portion of the terminal, which depends on the conditions of the atmosphere (rain) that, once again makes that the device does not show enough repetitive values.

### DESCRIPTION OF THE INVENTION.-

The present invention provides a new system for absorbing the kinetic energy from the frontal impact of a vehicle against a an impact attenuator or a barrier terminal according to claim 1, which has advantages with respect to the present state of the art in that it optimizes the features of the system in terms of:
1.- Better controlled performance and efficiency of energy absorption along the length of the system.
2.- Total stability of functioning over time.
3.- Greater durability.
4.- Lower economic cost.
5.- Greater ease of repair and better reutilization.

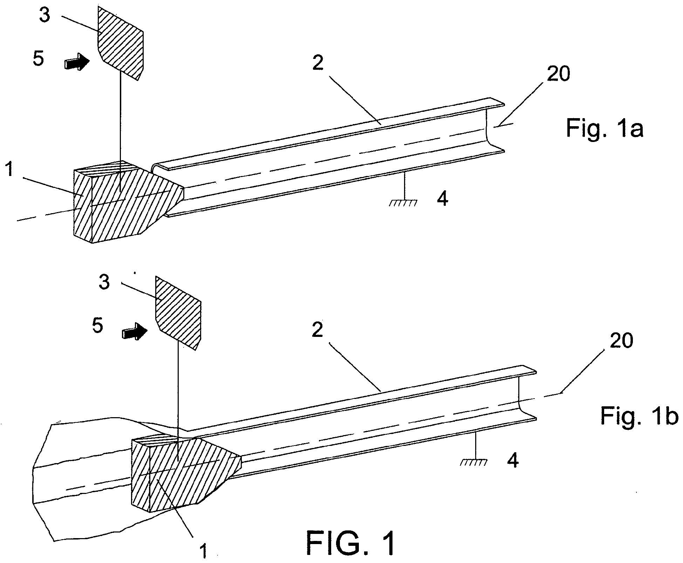

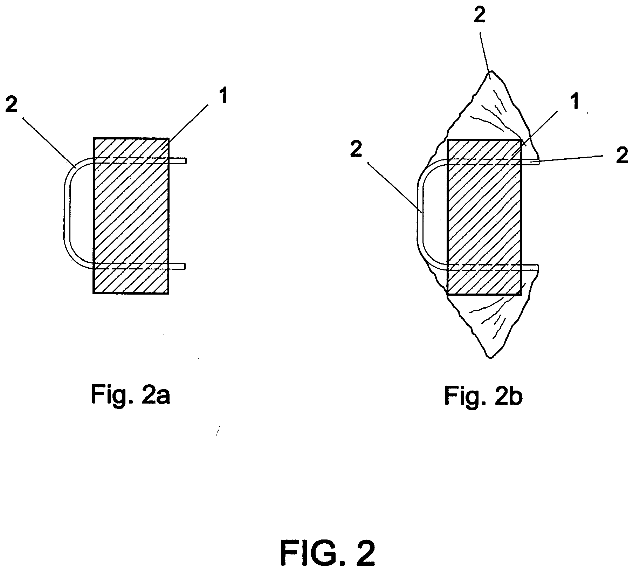

This new system for absorbing the kinetic energy of the frontal impact of a vehicle against an impact attenuator or barrier terminal basically comprises two interrelated elements as shown in Figure 1, sub-Figure 1a:
- an impact element or ram (1),
- a deformable metallic profile (2) arranged longitudinally,
which are arranged in the system in such a way that the transverse cross-section of the ram (1) interferes wholly or partially with the transverse cross-section of the deformable profile (2), as shown in Figure 2, sub-Figure 2a.

The ram (1) is rigidly joined, directly or indirectly, with suitable means of attachment to a structural element (3) of the containment system that is capable of being longitudinally displaced as a consequence of the frontal impact of a vehicle against the frontal part, in other words, the part of the containment system closest to the incident traffic, as shown in Figure 1, sub-Figure 1a. This structural element (3) is located and fitted in such a way that it is capable of directly or indirectly receiving the frontal impact of the vehicle (5) and transmitting it to the ram (1). The ram (1) and the structural element (3) described above form part of the moving part of the system, in other words, the part of the system that is longitudinally displaced during the frontal impact (5) of a vehicle.

The deformable profile (2) is rigidly joined, directly or indirectly, by means of suitable means of attachment to the ground (4) and it therefore forms part of the static part of the system, in other words, the part of the system that does not move during the frontal impact (5) of a vehicle.

In this way, when a vehicle impacts frontally against the system and produces the longitudinal displacement of the structural element (3) towards the rear part of the system, the ram (1) that is attached to this experiences the same displacement in the longitudinal direction, which is parallel to the axis (20) of the deformable profile (2). Since the transverse arrangement of the two elements (1) and (2) is such that the cross-section of the ram (1) partially or wholly intercepts the cross-section of the deformable profile (2), so the ram (1), when it is longitudinally displaced, causes a plastic deformation to one, several or all of the faces of the deformable profile to the degree that it advances along it, as shown in Figures 1, sub-Figure 1b and Figure 2, sub-Figure 2b. The progressive plastic deformation of the deformable metallic profile (2) produced by the passage of the ram (1) which advances along it, intercepting it, absorbs or consumes the kinetic energy of the vehicle until it comes to a complete halt. So, this mechanism formed by the combination of a ram (1) and a deformable profile (2) converts the frontal kinetic energy of the impact of a vehicle against the system into a plastic deformation of the profile, once that energy has been transmitted to the ram (1).

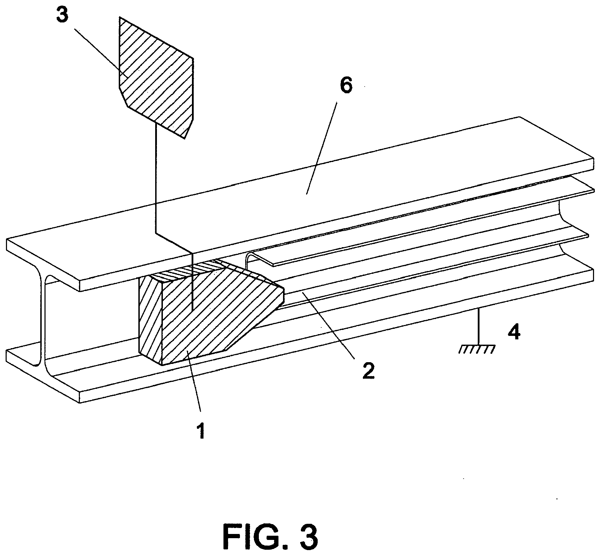

So that the unit formed by the ram (1) and the structural element (3) of the system can be displaced longitudinally along it and thereby achieve the deformation of the profile (2) by interception with the ram (1), the ram (1) and the structural element (3) need to be displaced just longitudinally without doing so in other directions. One solution for achieving this consists of providing a longitudinal guide profile (6), as shown in Figure 3, which is not deformable by the ram and is rigidly attached or secured to the ground (4), in such a way that both the structural element (3) and the ram (1) use it as a guide in the manner of a support or runner. This longitudinal guide profile (6) forms part of the static part of the system.

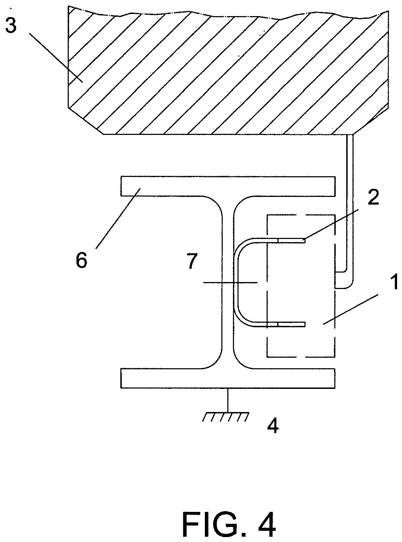

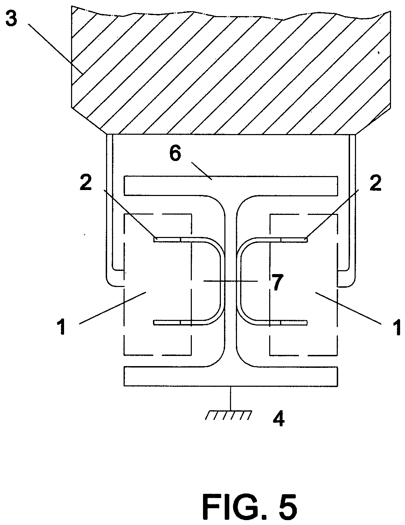

The mechanism is simplified if, moreover, the deformable profile (2) is rigidly fixed with suitable means of attachment (7) to the guide profile (6), as shown in Figure 4. The same guide profile (6) can have two or more deformable profiles (2) fixed to it, as shown in Figure 5. In this latter case, the structural element (3) of the system is provided with one, two or several rams (1) each corresponding to one of the deformable profiles (2).

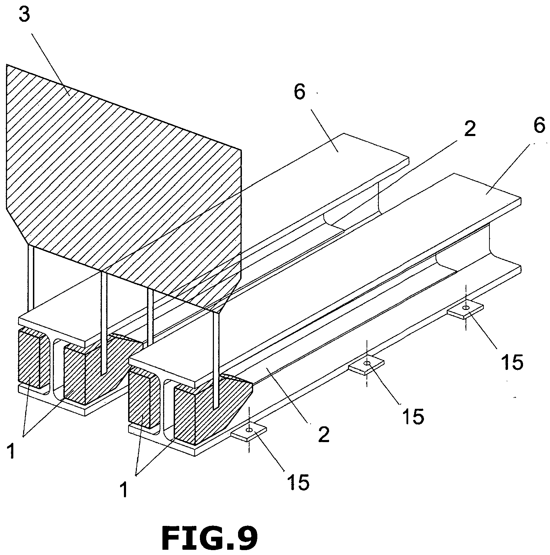

In order to achieve the desired level of energy absorption as well as a deceleration control suited to the magnitude of the design frontal impact, two or more longitudinal guide profiles (6) can be provided, parallel and close to each other, and rigidly secured to the ground (4) by suitable means (15) and preferably connected together, on which the deformable profiles (2) are fitted, using one, two or more profiles (2) in each guide profile (6), as shown in Figure 9.

The ram (1) can have different geometries depending on the deformation work of the profile that is expected of it and of the actual cross-section of the deformable profile (2). With the aim of the attack of the ram (1) against the profile (2) being as efficient and controlled as possible, the ram (1) preferably has its forward part (taken in the direction of advance of the impact) in the form of a wedge, as can been seen in Figure 1.

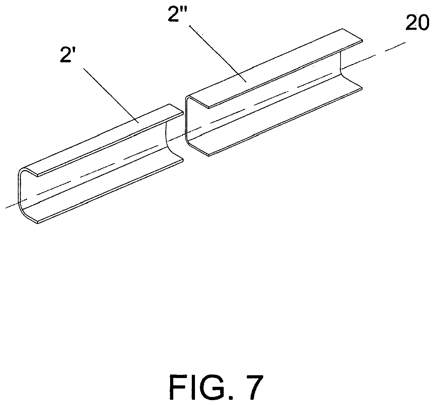

The deformable profile (2) can in turn consist of two or more sections (2') (2") arranged longitudinally one after the other, as shown in Figure 7. The dimensions of some of the faces of the cross-section of the profile (2) along with its thickness can vary from one section (2') to another (2"). With this, the resistance of the profile (2) to the passage of the ram (1) manages to be varied on a modular basis thereby controlling the decelerations produced in the vehicle due to the reaction of the mechanism for absorbing the energy in that vehicle, as well as the amount of energy consumed per unit of length. The larger the dimension of the faces and the greater the thickness, the greater the resistance to the passage of the ram. At each instant, the resistance of the mechanism has to be adjusted to the changes of speed that it is wished to achieve in the vehicle. Therefore, in the first instants of the impact which corresponds of course to the greatest speed of the vehicle, it is advisable for the resistance to be low or even zero in order not to cause any sudden jumps, and to increase the resistance as the vehicle is brought to a halt. The decomposition of the deformable profile (2) into sections of different cross-section or thickness (2') (2") is fundamental for achieving the controlled functioning of the absorption mechanism.

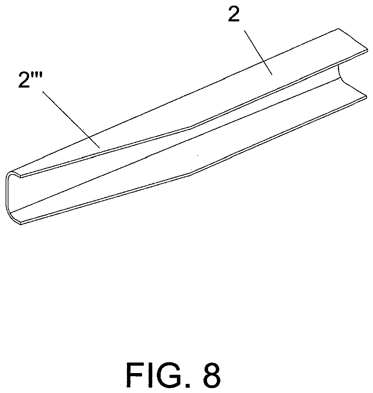

Given that, in the first moments of the frontal impact of a vehicle against a system, the decelerations produced on the vehicle must in particular be controlled since this is when the speeds are greatest, and all the more so if it is borne in mind that in these first instants the vehicle has to set into motion the moving masses of the system, it is therefore advisable that the resistance of the deformable profile (2) to the passage of the ram (1) should be minimal or zero at these first instants. To achieve this, a section of deformable profile (2"') is provided with one or more faces whose dimension increases from a minimum or zero length until achieving the constant value of the cross-section of the profile, as shown in Figure 8.

Due to the use of an open profile with a cross-section in the form of a "U", "C", "sigma" or "omega", the ram (1) attacks the profile mostly via the open part, deforming and opening out part or all of the faces (wings and flanges) other than the core or ridge of the profile. When an open profile is used with a "double wave" or "triple wave" cross-section any part of the profile can be attacked by the ram, either opening it out or folding or crushing it one against the other.

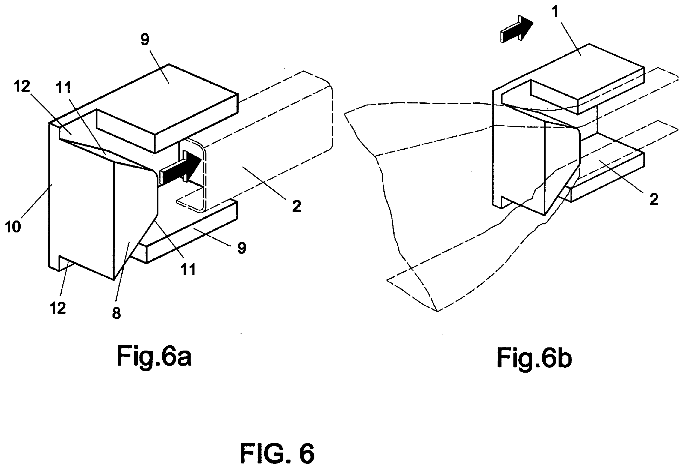

Figure 6, with its sub-Figures 6a and 6b, shows a very efficient configuration of the ram (1) when the deformable profile (2) has an open cross-section in the form of a "U", "C", "sigma" or "omega". The ram (1) consists of a base plate (10) by way of support for a core (8) with the forward part (in the direction of advance) having the form of a wedge and with two wings (9) in their upper and lower ends, which do not cover the entire length of the ram (1), with two openings (12) remaining in the rear part thereof. The height of the core or ridge of the deformable profile (2) with open cross-section is greater than the height of the wedge-shaped front part of the core (8) of the ram (1) but less than the distance between the wings (9) of the ram and less, in turn, than the height of the rear part of said core (8) in such a way that, as the system has the ram (1) with its base (10) facing the ridge of the deformable profile (2) and, to the degree that the ram (1) is longitudinally displaced along the deformable profile (2), the wedge-shaped attack surfaces (11) of the core (8) of the ram (1) force the wings of the deformable profile (2) to open and spread out, being plastically deformed and with both wings of the profile (2) projecting through the openings (12) of the rear part of the ram (1).

### DESCRIPTION OF THE DRAWINGS

In order to complement the description being made and with the aim of aiding a better understanding of the characteristics of the invention, in accordance with a preferred example of a practical embodiment thereof, attached as an integral part of this description is a set of drawings in which, on an illustrative basis without being limiting, the following has been represented:
**Figure 1****.-** Shows a lateral perspective view of the unit formed by the rigid impact body or "ram" and a deformable longitudinal profile fixed to the ground.
**Figure 2****.-** Shows a transverse cross-section of the unit formed by the rigid impact body or "ram" and the deformable longitudinal profile, prior to receiving and transmitting the impact (**Figure 2a**) and during the longitudinal displacement of the "ram" (**Figure 2b**).
**Figure 3****.-** Corresponds to a lateral perspective view of the longitudinal guide profile with cross-section in the form of an "H", and of the structural element and "ram".
**Figure 4****.-** Shows a transverse cross-section of the guide profile with cross-section in the form of an "H", the deformable profile, and the "ram".
**Figure 5****.-** Shows a transverse cross-section with the same guide profile with cross-section in the form of an "H" and two deformable profiles, and two "rams".
**Figure 6****.-** Shows a lateral perspective of a rigid impact body or "ram" in the form of a wedge and two end wings (**Figure 6a**), and the profile deformed as the "ram" is displaced along it (**Figure 6b**).
**Figure 7****.-** Shows a lateral perspective view of a deformable profile consisting of two consecutive sections.
**Figure 8****.-** Shows a lateral perspective view of a deformable profile in which the dimension of one or more of its parts progressively increase along the profile until reaching a constant value.
**Figure 9****.-** Shows a lateral perspective view of the unit formed by two equal longitudinal guide profiles with cross-section in the form of an "H", with two open deformable profiles each in the form of a "U", arranged in both throats of the cross-section of the "H" guide profile.

### EXAMPLE OF EMBODIMENT OF THE INVENTION

Figure 9 shows a particular embodiment of the present invention consisting of a system for absorbing the kinetic energy of a vehicle impacting frontally against an impact attenuator or a barrier terminal, the base of which is formed by two longitudinal guide profiles (6) of identical cross-section in the form of an "H", arranged parallel and very close to each other, connected together and secured to the ground (4) by suitable anchor bolts (15).

Fixed centrally to the core of each guide profile (6) by adequate means of attachment (7), figure 4, are two deformable profiles (2) open in cross-section in the form of a "U", arranged symmetrically one in each throat of the "H" shaped cross-section.

Each one of the deformable profiles (2) with cross-section in the form of a "U" is in turn made up of several sections (2') (2"), figure 7, with an identical "U" shaped cross-section but of different thickness, with increasing thicknesses in the direction of the impact. The first sections of each "U" shaped deformable profile (2), understanding as such the first to be attacked by the ram (1) during the frontal impact of a vehicle (5) against the attenuator or terminal, have their wings reduced in the initial section (2"'), figure 8, in such a way that the length of each of the wings of the "U" shaped profile increase in that section, until reaching the length of wing that corresponds to the cross-section of said "U" shaped profile of the consecutive sections.

The attenuator has a structural element (3) by way of a frame, arranged vertically and perpendicular to the base formed by the guide profiles (6) and joined rigidly to four rams (1), capable of being longitudinally displaced along the guide profiles (6) sliding as if the latter were runners, supported on them and being connected to them by means of a suitable guiding system, with the four rams (1) joined to the element (3) and arranged in the four throats of the guide profiles (6) in such a way that, when each ram (1) advances in the direction of the frontal impact of a vehicle against the structural element (3), each ram (1) intercepts the deformable profile (2) located in the same throat.

The four rams (1) present a very similar configuration, figure 6. Each ram (1) consists of a base plate (10) by way of support for a core (8) with the forward part in the form of a wedge and with two wings (9) in its ends, upper and lower, which do not cover the entire length of the ram (1), there remaining two openings (12) in the rear part thereof. The height of the core of the deformable profile (2) with a "U" shaped cross-section is greater than the height of the wedge-shaped front part (in the direction of advance) of the core (8) of the ram (1) but less than the distance between the wings (9) of the ram and less, in turn, than the height of the rear part of said core (8) in such a way that, as the system has the ram (1) with its base (10) facing the open part of the "U" shaped cross-section of the deformable profile (2) and, to the degree that the ram (1) is longitudinally displaced along the deformable profile (2), the wedge-shaped attack surfaces (11) of the core (8) of the ram (1) force the wings of the deformable profile (2) to open and spread out, being plastically deformed and with both wings of the profile (2) projecting through the openings (12) of the rear part of the ram (1).

## Claims

1. System for absorbing the kinetic energy of the frontal impact of a vehicle against an impact attenuator or a barrier terminal on which it is meant to be mounted, the impact attenuator or barrier terminal being of the kind for use on the sides and central reservations of roads and having a structural element (3) that is capable of being displaced in the longitudinal direction of the impact attenuator or barrier terminal as a consequence of an impact, said system comprising:
- an impact element or ram (1) comprising a rigid body and consisting of a core (8), the forward part of which has the form of a wedge,
- and a deformable longitudinal metallic profile (2) having a core, wherein the height of the core of the deformable profile (2) is greater than the height of the wedge-shaped forward part of the core (8) of the ram (1) but less than the height of the rear part of said core (8),
said ram (1) being, in use, attached directly or indirectly to said structural element (3) and said deformable profile (2) being, in use, directly or indirectly secured to the ground (4),
such that during an impact, the ram (1) moves along the deformable profile (2) which remains substantially static, the wedge-shaped forward part of the core (8) of the ram (1) functioning as an attack surface (11) producing plastic deformations propagating along the deformable profile (2),
**characterized in that**
- the ram (1) further consists of a base plate (10) which serves as support for said core (8) and which comprises an upper and a lower wing (9) at an end, wherein said upper and lower wings (9) do not cover the entire length of the ram (1), thereby leaving two openings (12) in the rear part of said ram (1),
- **in that** the deformable profile (2) is of an open cross-section in the form of a "U", "C", "sigma" or "omega", said cross-section thus consisting of a core and two wings,
- and **in that**, during an impact, as the ram moves along the deformable profile (2), said attack surface (11) forces the wings of the deformable profile (2) to open and spread out, with both wings of the profile (2) projecting through said openings (12) at the rear part of the ram (1).

2. System according to claim 1, wherein the deformable profile (2) is in turn made up of two or more consecutive sections (2') (2"), arranged longitudinally one after the other, which can, with respect to each other, have a different dimension for one or more of the parts or faces forming their cross-section or have different thickness, or have different dimensions of faces of cross-section and different thickness.

3. System according to either of the above claims, wherein the deformable profile (2) has, along part (2"') or all of its length of the same section, one or more faces whose length increases progressively until achieving a constant value.

4. System according to any of the above claims, wherein the deformable metallic profile (2) is rigidly joined to a guide profile (6) arranged longitudinally in the system, with its longitudinal axis parallel to the axis (20) of the deformable profile (2), said profile (6) being directly or indirectly secured in the ground (4).

5. System according to claim 4, wherein two or more deformable profiles (2) are secured on the same guide profile (6).

6. System according to claim 5, wherein the guide profile (6) is arranged in the system in such a way that, in the event of frontal impact from a vehicle, the structural element (3) slides, taking the guide profile (6) as its guide, support or runner during all or part of the displacement of the ram (1) along the deformable profile (2).

7. System according to claim 6, wherein the guide profile (6) has a cross-section in the form of an "H", "U", "C", "omega" or "sigma", with the deformable profile (2) being fixed to the core or ridge of the guide profile (6) in such a way that both the ram (1) and the deformable profile (2) remain totally or partially located in the throat of the guide profile (6).

8. System according to claim 7, wherein it consists of two or more guide profiles (6) arranged in parallel.

9. System according to any of the above claims, wherein the unit formed by the deformable profile or profiles (2) and the guide profile or profiles (6) constitute the static base of the system, said unit being secured in the ground (4) by suitable means of securing (15) and in that the unit formed by the ram or rams (1) and the structural element (3) constitutes part of the moving structure of the system, capable of being longitudinally displaced on the static base when receiving the frontal impact of a vehicle.

10. System according to any of the above claims, wherein the ram (1) is in turn the structural element (3) intended to receive the frontal impact of the vehicle and therefore the ram (1) and the structural element (3) are materialized in a single element.

11. System according to any of the above claims, wherein the ram (1) is made of a metallic material.

## Patentansprüche

1. System zum Absorbieren der kinetischen Energie beim Frontalaufprall eines Fahrzeugs auf einen Aufpralldämpfer oder ein Leitplankenende, an das es angebracht ist, wobei der Aufpralldämpfer oder das Leitplankenende von der Art ist, die an den Seiten- und Mittelstreifen von Straßen verwendet wird und ein Strukturelement (3) aufweist, das in Längsrichtung des Aufpralldämpfers oder des Leitplankenendes in Folge eines Aufpralls verschoben werden kann, wobei das System umfasst:
- ein/en Aufprallelement oder -block (1), das/der einen starren Körper umfasst und aus einem Kern (8) besteht, dessen vorderes Teil die Form eines Keils aufweist,
- und ein deformierbares, längslaufendes Metallprofil (2), das einen Kern aufweist, wobei die Höhe des Kerns des deformierbaren Profils (2) größer ist als die Höhe des keilförmigen vorderen Teils des Kerns (8) des Blocks (1), aber kleiner ist als die Höhe des hinteren Teils des Kerns (8), wobei der Block (1) im Gebrauch direkt oder indirekt an dem Strukturelement (3) angebracht ist, und das deformierbare Profil (2) im Gebrauch direkt oder indirekt am Boden (4) befestigt ist, so dass sich während eines Aufpralls der Block (1) entlang des deformierbaren Profils (2) bewegt, das im Wesentlichen statisch bleibt, wobei der keilförmige vordere Teil des Kerns (8) des Blocks (1) als Angriffsfläche (11) wirkt und plastische Verformungen erzeugt, die sich entlang des deformierbaren Profils (2) ausbreiten, **dadurch gekennzeichnet, dass**
- der Block (1) des Weiteren aus einer Grundplatte (10) besteht, die als Stütze für den Kern (8) dient und die einen oberen und einen unteren Flügel (9) an einem Ende aufweist, wobei der obere und untere Flügel (9) nicht die gesamte Länge des Blocks (1) abdecken und dadurch zwei Öffnungen (12) in dem hinteren Teil des Blocks (1) freilassen,
- dass das deformierbare Profil (2) über einen offenen Querschnitt in "U"-, "C"-, "Sigma"- oder "Omega"-Form verfügt, wobei der Querschnitt somit aus einem Kern und zwei Flügeln besteht,
- und dass während eines Aufpralls, wenn sich der Block entlang des deformierbaren Profils (2) bewegt, die Angriffsfläche (11) die Flügel des deformierbaren Profils (2) dazu zwingt, sich zu öffnen und auszubreiten, wobei beide Flügel des Profils (2) durch die Öffnungen (12) im hinteren Teil des Blocks (1) hindurch ragen.

2. System nach Anspruch 1, wobei das deformierbare Profil (2) wiederum aus zwei oder mehr aufeinander folgenden Abschnitten (2') (2") besteht, die längslaufend hintereinander angeordnet sind und die in Bezug zueinander eine unterschiedliche Abmessung oder eine unterschiedliche Dicke für ein oder mehr Teile oder Flächen, die ihren Querschnitt bilden, aufweisen können, oder Querschnittsflächen mit unterschiedlichen Abmessungen und einer unterschiedlichen Dicke aufweisen können.

3. System nach einem der oben genannten Ansprüche, wobei das deformierbare Profil (2) entlang Teil (2"') oder der gesamten Länge desselben Abschnitts eine oder mehrere Flächen aufweist, deren Länge fortschreitend ansteigt bis ein konstanter Wert erreicht wird.

4. System nach einem der oben genannten Ansprüche, wobei das deformierbare Metallprofil (2) starr mit einem Führungsprofil (6) verbunden ist, das längslaufend in dem System angeordnet ist, wobei seine Längsachse zur Achse (20) des deformierbaren Profils (2) parallel liegt, wobei das Profil (6) direkt oder indirekt im Boden (4) befestigt ist.

5. System nach Anspruch 4, wobei zwei oder mehrere deformierbare Profile (2) an demselben Führungsprofil (6) befestigt sind.

6. System nach Anspruch 5, wobei das Führungsprofil (6) in dem System so angeordnet ist, dass das Strukturelement (3) bei einem Frontalaufprall eines Fahrzeugs gleitet und das Führungsprofil (6) als seine Führung, Stütze oder Laufschiene während der gesamten oder teilweisen Verschiebung des Blocks (1) entlang des deformierbaren Profils (2) verwendet.

7. System nach Anspruch 6, wobei das Führungsprofil (6) einen Querschnitt in "H"-, "U"-, "C"-, "Omega"- oder "Sigma"-Form aufweist, wobei das deformierbare Profil (2) an dem Kern oder dem Kamm des Führungsprofils (6) so fixiert ist, dass sowohl der Block (1) als auch das deformierbare Profil (2) vollständig oder teilweise in dem Halsstück des Führungsprofils (6) platziert bleiben.

8. System nach Anspruch 7, wobei es aus zwei oder mehr Führungsprofilen (6) besteht, die parallel angeordnet sind.

9. System nach einem der oben genannten Ansprüche, wobei die aus dem deformierbaren Profil oder Profilen (2) und dem Führungsprofil oder -profilen (6) gebildete Einheit die statische Basis des Systems darstellt, wobei die Einheit im Boden (4) mit geeigneten Sicherungsmitteln (15) befestigt ist, und wobei die aus dem Block oder den Blöcken (1) und dem Strukturelement (3) gebildete Einheit einen Teil der beweglichen Struktur des Systems darstellt, der längslaufend auf der statischen Basis verschoben werden kann, wenn der Frontalaufprall eines Fahrzeugs aufgenommen wird.

10. System nach einem der oben genannten Ansprüche, wobei der Block (1) wiederum das Strukturelement (3) ist, das den Frontalaufprall eines Fahrzeugs aufnehmen soll, und daher der Block (1) und das Strukturelement (3) in einem einzelnen Element realisiert sind.

11. System nach einem der oben genannten Ansprüche, wobei der Block (1) aus einem Metallmaterial besteht.

## Revendications

1. Système d'absorption de l'énergie cinétique de l'impact frontal d'un véhicule contre un atténuateur d'impact ou une extrémité de barrière sur le ou laquelle il est destiné à être monté, l'atténuateur d'impact ou l'extrémité de barrière étant du type à utiliser sur le côtés et les terre-pleins centraux de routes et ayant un élément structural (3) apte à être déplacé dans la direction longitudinale de l'atténuateur d'impact ou de l'extrémité de barrière en conséquence d'un impact, ledit système comprenant :
- un mouton ou élément d'impact (1) comprenant un corps rigide et constitué(e) d'un noyau (8), dont la partie avant a la forme d'une cale,
- et un profil métallique longitudinal déformable (2) ayant un noyau, dans lequel la hauteur du noyau du profil déformable (2) est supérieure à la hauteur de la partie avant en forme de cale du noyau (8) du mouton (1) mais inférieure à la hauteur de la partie arrière dudit noyau (8), ledit mouton (1) étant, en utilisation, attaché directement ou indirectement audit élément structural (3) et ledit profil déformable (2) étant, en utilisation, fixé directement ou indirectement au sol (4), de sorte que pendant un impact, le mouton (1) se déplace le long du profil déformable (2) qui reste sensiblement statique, la partie avant en forme de cale du noyau (8) du mouton (1) fonctionnant comme une surface d'attaque (11) produisant les déformations plastiques se propageant le long du profil déformable (2), **caractérisé en ce que**
- le mouton (1) est en outre constitué d'une plaque de base (10) qui sert de support pour ledit noyau (8) et qui comprend une aile supérieure et une aile inférieure (9) au niveau d'une extrémité, dans lequel lesdites ailes supérieure et inférieure (9) ne couvrent pas toute la longueur du mouton (1), laissant ainsi deux ouvertures (12) dans la partie arrière dudit mouton (1),
- **en ce que** le profil déformable (2) a une section transversale ouverte sous la forme d'un « U », d'un « C », d'un « sigma » ou d'un « oméga », ladite section transversale se composant ainsi d'un noyau et de deux ailes,
- et **en ce que**, lors d'un impact, à mesure que le mouton se déplace le long du profil déformable (2), ladite surface d'attaque (11) force les ailes du profil déformable (2) à s'ouvrir et à se déployer, les deux ailes du profil (2) faisant saillie à travers lesdites ouvertures (12) au niveau de la partie arrière du mouton (1).

2. Système selon la revendication 1, dans lequel le profil déformable (2) est quant à lui constitué de deux sections consécutives (2') (2") ou plus, disposées au plan longitudinale les unes après les autres, qui peuvent, les unes par rapport aux autres, avoir une dimension différente pour une ou plusieurs des parties ou faces formant leur section transversale ou avoir une épaisseur différente ou avoir des dimensions différentes des faces de section transversale et une épaisseur différente.

3. Système selon l'une quelconque des revendications précédentes, dans lequel le profil déformable (2) possède, le long de la partie (2"') ou de toute sa longueur de la même section, une ou plusieurs faces dont la longueur augmente progressivement jusqu'à atteindre une valeur constante.

4. Système selon l'une quelconque des revendications précédentes, dans lequel le profil métallique déformable (2) est relié rigide à un profil de guidage (6) disposé longitudinalement dans le système, avec son axe longitudinal parallèle à l'axe (20) du profil déformable (2), ledit profil (6) étant directement ou indirectement fixé dans le sol (4).

5. Système selon la revendication 4, dans lequel deux profils déformables (2) ou plus sont fixés sur le même profil de guidage (6).

6. Système selon la revendication 5, dans lequel le profil de guidage (6) est disposé dans le système de sorte que, en cas d'impact frontal d'un véhicule, l'élément structural (3) coulisse, prenant le profil de guidage (6) comme son guide, son support ou sa glissière pendant la totalité ou une partie du déplacement du mouton (1) le long du profil déformable (2).

7. Système selon la revendication 6, dans lequel le profil de guidage (6) a une section transversale sous la forme d'un « H », d'un « U », d'un « C », d'un « oméga » ou d'un « sigma », alors que le profil déformable (2) est fixé au noyau ou à l'arête du profil de guidage (6) de sorte que le mouton (1) et le profil déformable (2) restent totalement ou partiellement situés dans le col du profil de guidage (6).

8. Système selon la revendication 7, dans lequel il se compose de deux profils de guidage (6) ou plus disposés en parallèle.

9. Système selon l'une quelconque des revendications précédentes, dans lequel l'unité formée par le ou les profils déformables (2) et le ou les profils de guidage (6) constitue la base statique du système, ladite unité étant fixée dans le sol (4) par un moyen de fixation approprié (15) et en ce que l'unité formée par le ou les moutons (1) et l'élément structural (3) constitue une partie de la structure mobile du système, apte à être déplacée au plan longitudinal sur la base statique lors de la réception de l'impact frontal d'un véhicule.

10. Système selon l'une quelconque des revendications précédentes, dans lequel le mouton (1) est à son tour l'élément structural (3) destiné à recevoir l'impact frontal du véhicule et, par conséquent, le mouton (1) et l'élément structural (3) sont matérialisés en un seul élément.

11. Système selon l'une quelconque des revendications précédentes, dans lequel le mouton (1) est composée d'un matériau métallique.
